# EUROPÄISCHE PATENTSCHRIFT

(11) **EP 4 450 960 B1**
(45) Veröffentlichungstag und Bekanntmachung des Hinweises auf die Patenterteilung: **17.06.2026**
(21) Anmeldenummer: 23211227.6
(22) Anmeldetag: 21.11.2023
(51) Int. Cl.: G01N 23/087, G01N 23/18

(54) **RÖNTGEN-MESSVERFAHREN UND RÖNTGEN-MESSVORRICHTUNG ZUM VERMESSEN EINES STRANGES**
X-RAY MEASURING METHOD AND X-RAY MEASURING DEVICE FOR MEASURING A STRAND
PROCÉDÉ DE MESURE PAR RAYONS X ET DISPOSITIF DE MESURE PAR RAYONS X POUR MESURER UNE BARRE

(30) Priorität: 18.04.2023 DE 102023109662
(43) Veröffentlichungstag der Anmeldung: 23.10.2024
(73) Patentinhaber: CiTEX Holding GmbH, 49324 Melle (DE)
(72) Erfinder: Neumeister, Arno, 32457 Porta Westfalica (DE); Herrmann, Christoph, 76307 Karlsbad (DE)
(74) Vertreter: Bremer, Ulrich

(56) Entgegenhaltungen:
- JP-B2- 6 658 315
- RU-C2- 2 199 109
- EDALATI K ET AL: "The use of radiography for thickness measurement and corrosion monitoring in pipes", INTERNATIONAL JOURNAL OF PRESSURE VESSELS AND PIPING, ELSEVIER SCIENCE PUBLISHERS, BARKING, GB, vol. 83, no. 10, 29 September 2006 (2006-09-29), pages 736 - 741, XP027956758, ISSN: 0308-0161, [retrieved on 20061001]
- YENER ONEL: "Radiographic Wall Thickness Measurement of Pipes by a New Tomographic Algorithm", November 2000 (2000-11-01) - 16 April 2024 (2024-04-16), XP093152707, Retrieved from the Internet <URL:https://www.ndt.net/article/wcndt00/papers/idn369/idn369.htm>

## Beschreibung

Die Erfindung betrifft ein Röntgen-Messverfahren und eine Röntgen-Messvorrichtung zum Vermessen eines Stranges, insbesondere eines Rohres oder Wellrohres.

Röntgen-Messvorrichtungen ermöglichen eine Vermessung von Messobjekten aus unterschiedlichen Materialien, z.B. Kunststoffen, aber auch Metallschichten. Die kleine Wellenlänge der Röntgenstrahlung ermöglicht grundsätzlich hohe Auflösungen. Somit können Stränge, z.B. Rohre oder Wellrohre, direkt nach ihrer Extrusion kontinuierlich durch einen Messraum einer Röntgen-Messvorrichtung gefördert und vermessen werden. Die Röntgen-Messvorrichtungen weisen im Allgemeinen eine Röntgenquelle auf, die entlang ihrer Messachse divergente Röntgenstrahlung durch den Messraum zu einem der dahinterliegenden Röntgendetektor aussendet, der eine oder mehrere Detektorzeilen aus einzelnen Messkanälen bzw. Pixeln aufweist. Der Röntgendetektor nimmt somit eine Transmissionskurve auf, die durch die Absorption der Röntgenstrahlung in dem jeweiligen Messobjekt festgelegt wird. Dickere Materialbereiche absorbieren somit stärker und ermöglichen eine bessere Auswertung.

Bei der Röntgenvermessung von Rohren werden herkömmlicherweise Wanddicken in den äußeren Winkelbereichen des Erfassungswinkels bewertet, da hier die Rohrwand im Wesentlichen parallel von der Röntgenstrahlung durchquert wird und somit ein hoher Kontrast gebildet wird, wohingegen in der Mitte der Kontrast geringer ist.

Genaue Bestimmungen von Defekten sind im Allgemeinen nicht möglich, auch da bei vorgegebenen Belichtungszeiten das Rauschen bzw. Messrauschen erheblich ist. Bei längeren Belichtungszeiten kann das Rauschen reduziert werden, entsprechend kann jedoch ein kontinuierlich gefördertes Messobjekt dann im Allgemeinen nur bei kleineren Extrusionsgeschwindigkeiten erfasst werden, so dass die Extrusionsgeschwindigkeit begrenzt ist. Weiterhin ist die Vermessung komplexer Messobjekte, wie z.B. von Wellrohren, problematisch.

US 4,725,963 A beschreibt eine Vorrichtung und ein Verfahren zum kontaktlosen, zerstörungsfreien Vermessen von rohrförmigen Produkten und der Detektion von Fehlern. Hierbei wird radioaktive Strahlung von Kobalt und Cäsium eingesetzt, um von mehreren Strahlungsquellen aus das rohrförmige Produkt zu durchstrahlen, wobei die Messergebnisse mit einer idealen Kurve verglichen werden.

US 20219/0154596 A1 beschreibt ein Verfahren zum Bestimmen der geometrischen Parameter eines Objektes mittels Radiografie, wobei das Objekt hindurchgestrahlt wird. Hierbei wird ein radiografisches Bild des Objektes erzeugt und aus dem radiografischen Bild eine Vielzahl paralleler Schnittbilder ermittelt.

Die US 2009/0279772 A1 beschreibt ein Verfahren zum Detektieren von Anomalitäten durch die zerstörungsfreie Bildaufnahme. Hierbei wird ein Inspektions-Testbild des zu scannenden Objektes und eine Vielzahl von Referenzbildern verwendet, wobei in einem Anomalitäten-Detektionsmodell aufgrund einer statistischen Analyse Merkmale ermittelt werden.

RU 2199109 C2 beschreibt ein Verfahren zur Untersuchung der inneren Struktur von Objekten und eine entsprechende Vorrichtung. Hierbei werden Schattenbilder mittels Röntgenstrahlung erzeugt, wobei ein Messobjekt durch die Messvorrichtung geführt wird. Die so erzeugten Schattenbilder können nachfolgend miteinander verglichen werden.

JP 6658315 B2 beschreibt ein Verfahren zum Erfassen bzw. Inspizieren eines verschweißten Umfangsbereiches, bei dem die Enden von Rohren verbunden sind. Hierbei soll insbesondere der durch Verschmelzen ausgebildete Verbindungsbereich vollständig erfasst und bewertet werden. Hierzu werden mittels Röntgenstrahlen Bilder dieser verschweißten Umfangsbereiche erfasst und ausgewertet, um Fehler zu ermitteln.

Edalati K. et al, International Journal of Pressure Vessels and Piping, Elsevier Science Publishers, Barking, GB, beschreibt eine Vermessung von Rohren von 150 mm Durchmesser und unterschiedlichen Dicken durch zwei radiografische Techniken, wobei eine tangentiale Radiografie und eine Doppelwand-Radiografie durchgeführt werden, die zu unterschiedlichen optischen Dichten führen.

Yener Onel, Radiographic Wall Thickness Measurement of Pipes by a New Tomographic Algorithm, November 2000, beschreibt die Detektion von Erosion und Korrosion in Rohrleitungen durch radiografische Vermessung, wobei eine visuelle Bewertung der radiografischen Messungen durchgeführt wird. Um Verbesserungen gegenüber einer Bewertung der radiografischen Messung durch einen menschlichen Betrachter zu erreichen, wird eine neue Technik als Computer Tomographic Pipe Wall Thickness CTPWT durchgeführt, bei der eine radiografische Aufnahme erfolgt und das Bild digitalisiert wird.

Der Erfindung liegt daher die Aufgabe zugrunde, ein Röntgen- Messverfahren und eine Röntgen-Messvorrichtung zu schaffen, die eine sichere Vermessung und Erkennung von Defekten ermöglichen.

Diese Aufgabe wird durch ein Röntgen-Messverfahren und eine Röntgen-Messvorrichtung nach den unabhängigen Ansprüchen gelöst. Die Unteransprüche beschreiben bevorzugte Weiterbildungen.

Die erfindungsgemäße Röntgen-Messvorrichtung ist insbesondere zur Durchführung des erfindungsgemäßen Verfahrens vorgesehen.

Somit werden erfindungsgemäß beim Fördern bzw. Transportieren des Stranges durch den Messraum einer Röntgen-Messvorrichtung fortlaufend Transmissionskurven aufgenommen, die die Auflösung der Messung in einer Messrichtung, d.h. der Längserstreckung der Detektorzeile ermöglichen, die zur Transportrichtung und zur Messachse senkrecht verläuft. Hierbei ist ein Vergleich der Transmissionskurven vorgesehen, um aus diesem Vergleich Defekte zu ermitteln. Hierfür wird mindestens eine Transmissionskurve als Referenz-Transmissionskurve aufgenommen und gespeichert. Vorteilhafterweise werden mehrere Transmissionskurven durch Messungen des Stranges zu verschiedenen Zeitpunkten und somit an unterschiedlichen Stellen des Rohres aufgenommen und hieraus ein gemittelter Wert gebildet, der als Referenz-Transmissionskurve dient. Durch den Vergleich einer aktuellen Transmissionskurve mit der Referenz- Transmissionskurve können somit Fehler detektiert und insbesondere auch deren Form bzw. Topologie und/oder Volumen ermittelt werden.

Somit ist eine fortlaufende Vermessung des Stranges als Messobjekt möglich, wobei die aktuell aufgenommenen Transmissions-Kurven fortlaufend verglichen und überprüft werden können. Ein Fehler bzw. Defekt in den Strang kann somit direkt sofort erkannt und überprüft werden, um Änderungen der Produktionsparameter vorzunehmen.

Weiterhin ist durch den Vergleich auch eine Vermessung des Stranges in seinem mittleren Bereich möglich, der bei herkömmlichen Messungen aufgrund der geringen Absorption im Allgemeinen nicht bewertet wird.

Durch eine Mittelung, über mehrere Messungen, kann eine Transmissionskurve mit hoher Genauigkeit erstellt werden, bei der das Rauschen reduziert ist. Somit wird ein Vergleich einer aktuellen Transmissionskurve mit der Referenz-Transmissionskurve ermöglicht. Hierbei können in der Referenzkurve insbesondere auch spezifische Werte des Rauschens des Detektors erkannt und gespeichert sein, so dass das aktuelle Rauschen einer aktuellen Transmissionskurve nicht unzutreffend als Defekt erkannt wird. Gegenüber einer theoretischen idealen Transmissionskurve ist die erfindungsgemäß durch Mittelung gewonnene Referenz- Transmissionskurve somit vorteilhaft, da sie das spezifische Rauschen aufgrund spezifischer Eigenschaften der Röntgenquelle und des Röntgendetektors berücksichtigt.

Bereiche mit geringerer Transmission, d.h. höherer Absorption, können somit als Material-Verdickungen, bei extrudierten Rohren z.B. als Abbrand erkannt werden. Bereiche mit höherer Transmission, d.h. geringerer Absorption, können entsprechend als Materialschwächungen erkannt werden, z.B. Lunker oder Materialrisse in der Innenschicht oder Außenschicht.

Die Auswertung der Transmissionskurve erfolgt zunächst in der Messrichtung, d.h. der Längserstreckung der Detektorzeile, die senkrecht zur optischen Achse und im Allgemeinen auch senkrecht zur Transportrichtung verläuft. Hierbei können in aufeinanderfolgenden Kanälen bzw. Pixeln entlang der Messrichtung veränderte Bereiche erkannt werden. Weiterhin kann durch aufeinanderfolgende Messungen des transportierten Stranges eine Längserstreckung des Defektes in der Transportrichtung erfasst werden.

Durch weitere Maßnahmen kann die Genauigkeit der Ermittlung und Klassifizierung weiter verbessert werden. Indem mehrere Messachsen in Umfangsrichtung um den Messraum angeordnet sind, kann eine genauere Lokalisierung eines Defektes in dem Strang erfolgen, so kann z.B. ermittelt werden, ob der Defekt in der Materialwand eines Rohres, an der Innenschicht oder Außenschicht vorliegt. Eine Lokalisation kann somit z.B. durch trigonometrische Ermittlung erfolgen. Somit können insbesondere auch Fehler an der Innenschicht oder Lunker lokalisiert werden, die von außen nicht erkannt werden können.

Weiterhin können auch sich überlappende Defekte erkannt werden, z.B. ein Abbrand in dem Bereich einer Materialschwächung, z.B. eines Risses einer Schicht. Derartige Fehler können z.B. auftreten, wenn bei der Extrusion das Material am heißen Extruderkopf zu lange verbleibt und einen Abbrand bildet, so dass zum einen in der Schicht eine Materialschwächung auftritt und weiterhin das verbrannte Material als lokale Verdickung auftritt. Derartige Defekte können ansonsten bei einer Betrachtung einer einzelnen Transmissionskurve ggf. nicht hinreichend sicher erkannt werden, da die Transmission insgesamt nicht relevant beeinflusst wird. Durch den Vergleich mit der genaueren Referenz-Transmissionskurve und gegebenenfalls die dreidimensionale bzw. Topologie-Ermittlung können auch derart komplexere Fehler sicher erkannt und quantifiziert werden.

Gemäß einer bevorzugten Ausführungsform kann die Referenz-Transmissionskurve durch Einbeziehung aktueller Transmissionskurven fortlaufend geändert werden, wobei insbesondere ein adaptiver Vergleich der aktuellen Transmissionskurve mit den vorherigen Transmissionskurven erfolgen kann, z.B. unter Berücksichtigung von Änderungen der Intensitäten über einen längeren Zeitraum. Hierbei kann insbesondere ein Wandern des Fokus-Punktes Temperaturschwankungen am Detektor, weiterhin können auch Einflüsse durch die Außentemperatur, z.B. Änderungen der Außentemperatur, weiterhin Einflüsse durch Kühlung erkannt werden. Weiterhin kann insbesondere ein Verschleiß der Detektoren durch das Einbrennen der Röntgenstrahlung berücksichtigt werden, derartige Einbrenn-Vorgänge begrenzen im Allgemeinen die Lebensdauer von Röntgendetektoren. Indem das Einbrennen als Langzeitdrift erkannt wird, kann es somit berücksichtigt werden, so dass die Lebensdauer deutlich verlängert werden kann.

Somit kann insbesondere auch ermittelt werden, ob ein Fehler bereits einen unzulässigen Defekt oder noch eine zulässige Abweichung darstellt.

Gemäß einer weiteren Ausführungsform können die Röntgenquelle und/oder der Röntgendetektor verstellt werden. Hierbei ist gemäß einer Ausbildung eine gemeinsame Verstellung entlang der Messachse vorgesehen, d.h. auf den Strang zu und von dem Strang weg, um eine Zentrierung des Messobjektes zu erreichen. Weiterhin ist eine relative Verstellung der Röntgenquelle zu dem Röntgendetektor, z.B. eine Verstellung der Röntgenquelle bei festem Röntgendetektor möglich, um eine Fokussierung, z.B. auch als Autofokus, auszubilden, so dass z.B. der von dem Strang erfasste Bereich der Transmissionskurve vergrößert und somit die Auflösung verbessert wird.

Gemäß einer weiteren Ausführungsform kann die Messvorrichtung bzw. Röntgenquelle und Röntgendetektor gemeinsam um den Messraum bzw. das Messobjekt herum rotieren oder reversieren, um somit das Messobjekt von verschiedenen Umfangsrichtung herzu erfassen und z.B. die Lokalisierung eines Fehlers zu verbessern. Somit können Fehler in unterschiedlichen Bereichen der Transmissionskurve erfasst werden, wodurch sie auch besser identifiziert werden können.

Der Röntgendetektor kann als Detektorzeile aus z.B. dreitausend aufeinanderfolgenden Messkanälen bzw. Pixeln ausgebildet sein; weiterhin kann der Detektor auch als mehrdimensionale Matrix, z.B. mit zwei oder mehr Detektorzeilen ausgebildet sein. Alternativ und ergänzend hierzu können auch mehrere Messachsen aus jeweils Röntgenquelle und - detektor in Transportrichtung hintereinander vorgesehen sein, die somit eine Vermessung des Messobjektes durch aufeinanderfolgende Messebenen in der Transportrichtung ermöglichen. Neben einer senkrechten Ausrichtung der Messachse zur Transportrichtung sind auch schräge Anordnungen möglich, um die Absorption und somit den Kontrast zu erhöhen.

Die Messkanäle bzw. Pixel können hardware-mäßig ausgebildet sein als z.B. CMOS- Sensoren und/oder CCD- Sensoren und/oder Szintillations-Zähler. Sie können hierbei insbesondere auch als time to delay (TDI) CCD-Sensoren ausgebildet sein, bei dem das Messobjekt bzw. der Strang an dem Detektor entlang geführt wird und vorzugsweise eine Synchronisation der Bildaufnahme mit der Fördergeschwindigkeit erfolgen kann.

Der Röntgen-Detektor kann insbesondere plan ausgebildet sein oder konkav gekrümmt sein. Hierbei liegt die plane Messebene des Röntgen-Detektors vorteilhafterweise senkrecht zur Messachse der Röntgenquelle. Bei der Ausbildung als planer Röntgen-Detektor ist insbesondere keine genaue Positionierung des Rohres erforderlich, wohingegen bei konkaven Ausbildungen im Allgemeinen eine Positionierung des Rohres im Brennpunkt bzw. Mittelpunkt der konkaven Ausbildung vorgesehen ist. Somit wird auch ein Rohr, dass nicht genau an der vorgesehenen Stelle platziert ist, weiterhin gut erfasst.

Somit wird auch bei dem erfindungsgemäßen Verfahren vorteilhafterweise ein planer Röntgen-Detektor eingesetzt, so dass insbesondere der Strang nicht mehr so genau zu platzieren ist, was insbesondere auch bei Extrusionsprodukten vorteilhaft ist, bei denen der extrudierte Strang sich im Allgemeinen durchbiegt.

Bei dem erfindungsgemäßen Verfahren können vorteilhafterweise in der aktuellen Transmissionskurve durch den Vergleich mit der Referenz-Transmissionskurve als Fehler ein oder mehrere der folgenden Merkmale ermittelt werden:
- eine Materialschwächung, z.B. Fehlstelle, Riss in einer Schicht, Defekt oder Lunker, als zusammenhängende Bereiche oder Messkanäle mit einer geringeren Intensität, und/oder
- eine Material-Ablagerung, insbesondere Abbrand, als zusammenhängender Bereich von Messkanälen mit einer höheren Intensität. Hierbei können insbesondere auch überlappende Fehler als Bereich ermittelt werden, in denen sowohl Materialschwächungen als auch Material-Ablagerungen vorliegen.

Gemäß einer bevorzugten Ausbildung ist vorgesehen, dass bei der Bestimmung der Position des Fehlers ermittelt wird, ob der Fehler ausgebildet ist in:
einer Wand des Stranges, z.B einer Rohrwand,
an einer Außenfläche, z.B. einem Außenbereich einer Rohrwand,
im Inneren des Stranges, z. B. an einer Innenwand des Stranges, insbesondere durch eine Vermessung in mehreren Messachsen.

Gemäß einer bevorzugten Ausbildung ist bei dem Verfahren vorgesehen, dass die ein oder mehreren Röntgenquellen während des Transportes des Stranges verstellt werden
- in Transportrichtung, und/oder
- in Umfangsrichtung, z.B. rotierend und/oder reversierend. um die Transportachse und/oder eine Symmetrieachse des Messraums, und/oder
- in Richtung ihrer Messachse.

Hierbei ist vorteilhafterweise vorgesehen, dass bei der Verstellung der Röntgenquelle in Richtung der Messachse eine Fokussierung, z.B. eine Autofokussierung erfolgt, zur Änderung oder Anpassung des von dem Strang in der Transmissionskurve erfassten Bereichs.

Gemäß einer vorteilhaften Ausbildung ist bei der erfindungsgemäßen Röntgen-Messvorrichtung vorgesehen, dass sie eine Verstelleinrichtung zur Verstellung der Röntgenquelle und des Röntgendetektors entlang einer Messrichtung aufweist.

Die Röntgen-Spannung der Röntgenquelle kann insbesondere im Bereich von 15 bis 80 KV, vorzugsweise 15 bis 70 KV liegen, insbesondere mit Strömen im Bereich von 0,1 mA bis 2 mA.

Die Erfindung wird im Folgenden anhand der beiliegenden Zeichnungen an einigen Ausführungsformen näher erläutert. Es zeigen:
- Fig. 1: eine Röntgen-Messvorrichtung bei einer Leermessung;
- Fig. 2: die Röntgen-Messvorrichtung bei Vermessung eines ordnungsgemäßen Rohres, mit einer Referenz-Transmissionskurve als Mittelung über mehrere Messungen;
- Fig. 3: eine Messung mit einer Belichtungszeit von 1 ms, ohne Mittelung;
- Fig. 4: eine Messung eines Rohres mit lokaler Materialschwächung in einem mittleren Bereich;
- Fig. 5: eine Aufsicht auf die Anordnung von Fig. 3;
- Fig. 6: eine Aufsicht auf die Anordnung von Fig. 4 mit fehlerhaftem Rohr;
- Fig. 7: Transmissionskurven bei Vermessung
a) eines fehlerfreien Rohres
b) eines Rohres mit Materialschwächung entsprechend Fig. 4, 6;
c) eines Rohres mit Material-Ablagerung in einem mittleren Bereich;
d) eines Rohres mit Material-Ablagerung in einem äußeren Bereich;
- Fig. 8: eine Messvorrichtung mit drei Messachsen hintereinander;
- Fig. 9: eine Messvorrichtung mit größerem Abstrahlwinkel in Messrichtung;
- Fig. 10: die Vermessung eines Rohres mit senkrechter und schräger Messachse;

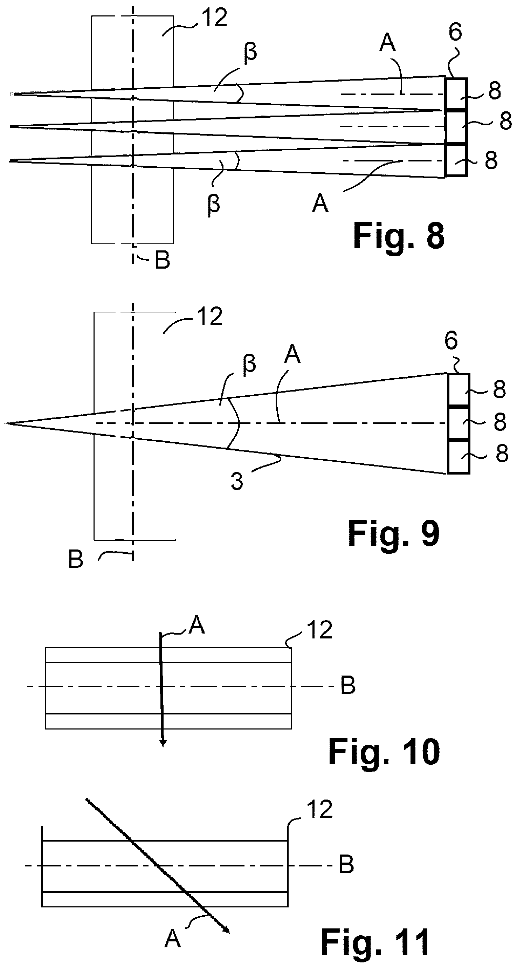

- Fig. 10: die Vermessung eines Rohres mit senkrechter Messachse;
- Fig. 11: die Vermessung eines Rohres mit schräger Messachse;

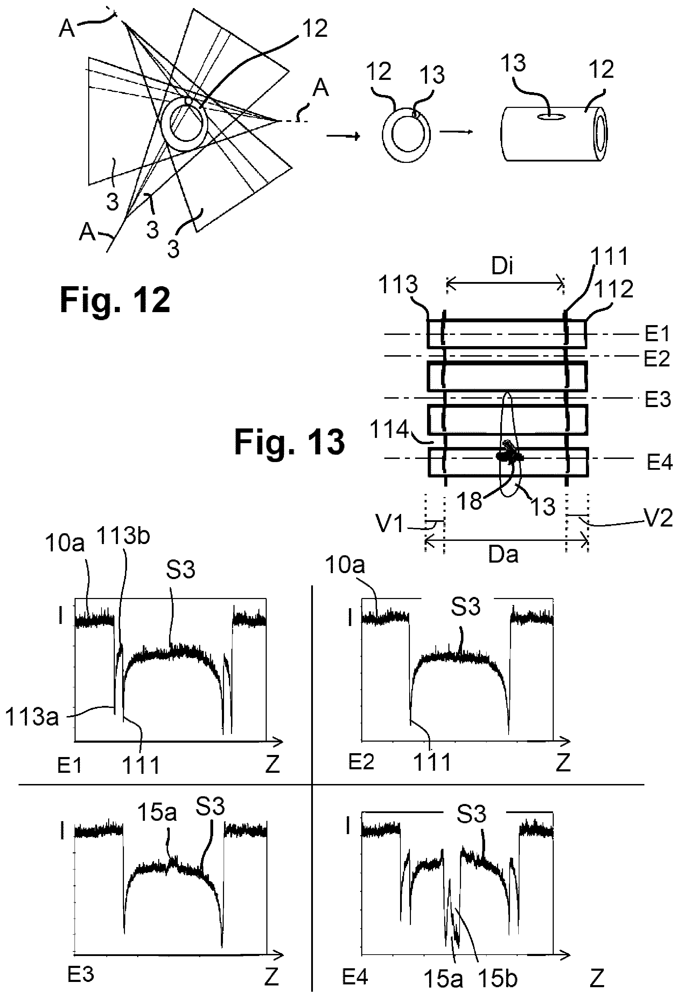

- Fig. 12: eine Messvorrichtung mit drei in Umfangsrichtung versetzt angeordneten Messachsen
- Fig. 13: die Vermessung eines Wellrohres in mehreren Ebenen;

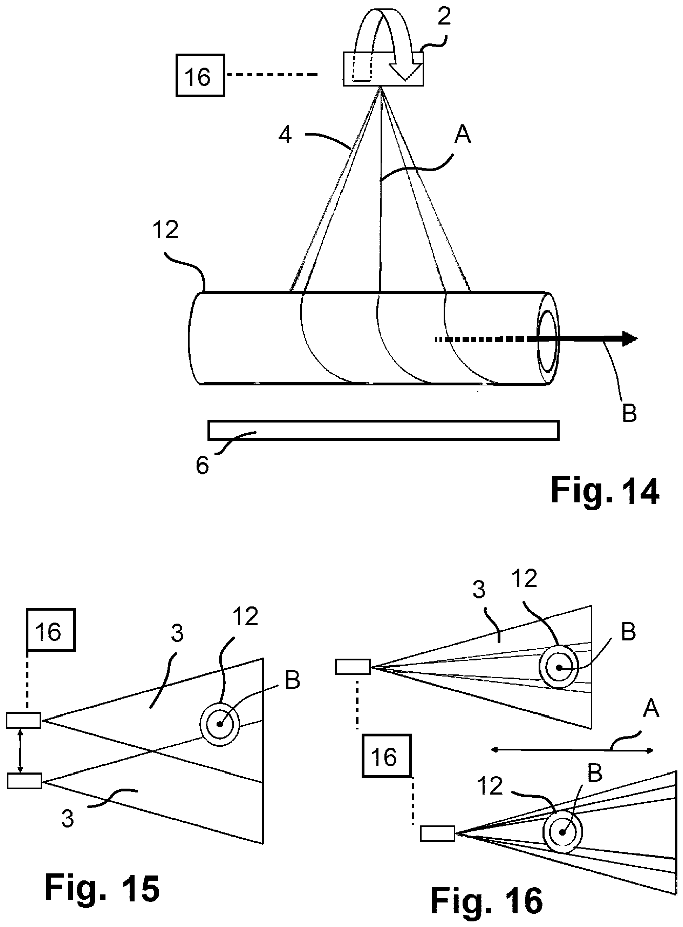

- Fig. 14: die Vermessung mit rotierender Messvorrichtung.
- Fig. 15: die Vermessung mit beweglicher Messachse als Autofokus;
- Fig. 16: die Vermessung mit beweglicher Messachse als einstellbarer Zoom.

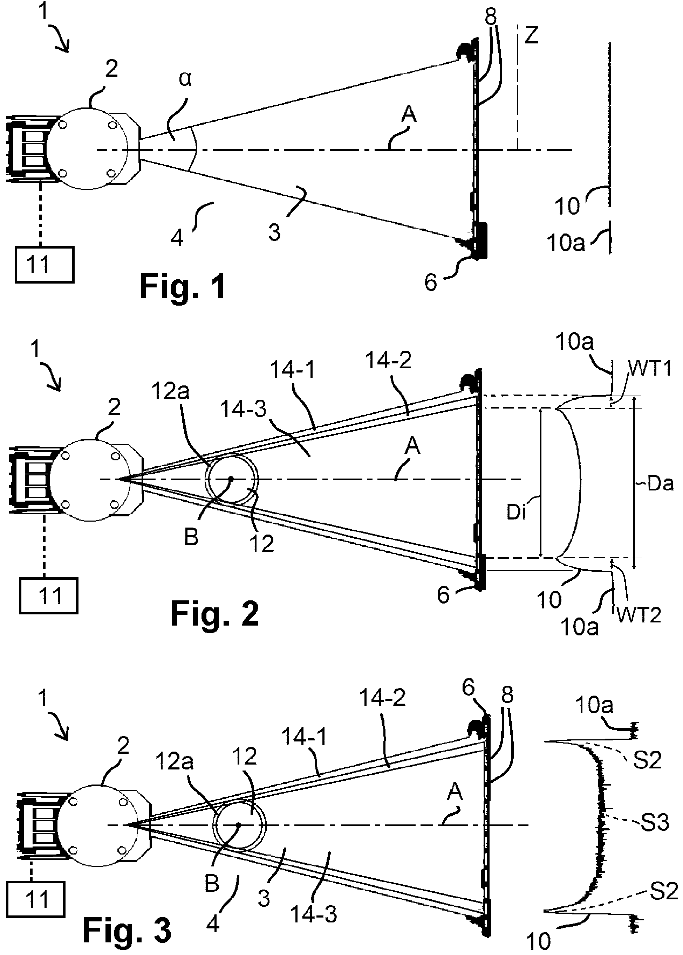

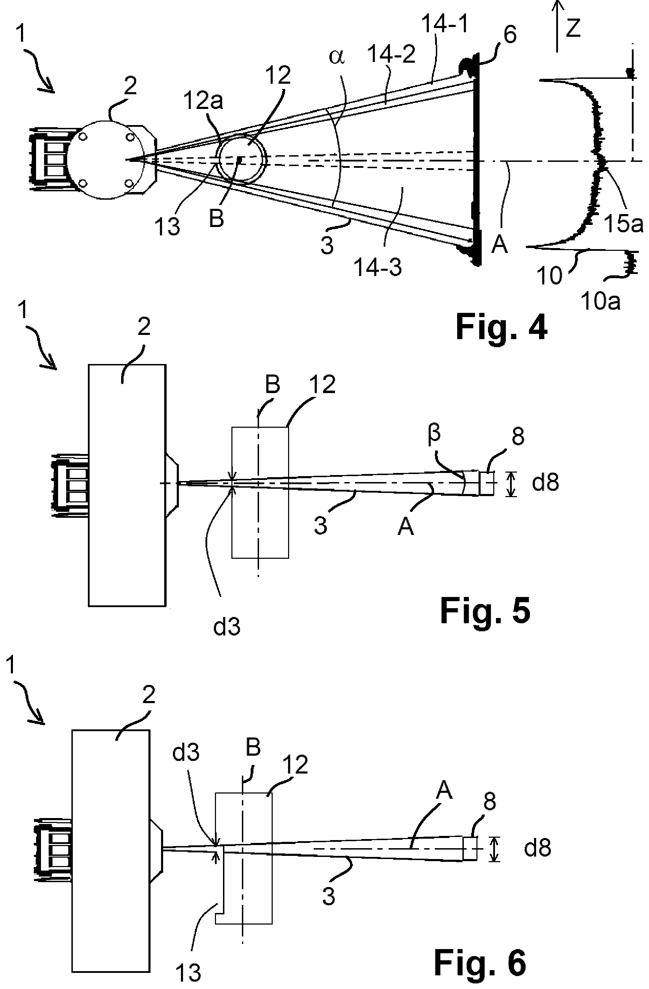

Figur 1 zeigt das Messprinzip einer Röntgen-Messvorrichtung 1, die hier mit einer Messachse ausgebildet ist und somit eine Röntgenquelle 2 aufweist, die einen Röntgenstrahl 3 mit einem Abstrahlwinkel α entlang einer Messachse A durch einen Messraum 4 auf einen Röntgendetektor 6 aussendet. Der Röntgendetektor 6 kann wie hier gezeigt plan oder auch konkav gekrümmt sein. Figur 1 zeigt eine Aufsicht auf den Röntgendetektor in der Messebene mit einer Auffächerung des Röntgenstrahls 3 in einem Abstrahlwinkel α (hier gegenüber der Messachse) in der Messebene, um den Messraum 4 weitgehend zu erfassen. Der Röntgendetektor 6 ist mit z. B. dreitausend Messkanälen 8 ausgebildet, die in einer Messrichtung Z aneinandergereiht sind. In der zur Messachse A und Messrichtung Z senkrechten Richtung der Transportachse B kann der Röntgendetektor 6 z. B. mit lediglich einem Messkanal, z. B. 70 Mikrometer Detektorbreite, ausgebildet sein, wie weiter unten mit Bezug zu Figur 5, 6 erläutert ist. Die Messkanäle 8 geben jeweils ein Intensitätssignal aus, das in Messrichtung Z die Transmissionskurve 10 bildet, die somit die Intensität I über die mehreren Messkanäle 8 bzw. Pixel wiedergibt. Die Intensität I wird in Abhängigkeit des im Messraum 4 erfassten Messobjektes, hier somit eines Rohres 12, abgeschwächt. In Figur 1 ist zunächst eine Transmissionskurve 10 eines gleichmäßigen Signals bei leerem Messraum 4 gezeigt.

Die Auswertung erfolgt insbesondere über eine Auswerteeinrichtung 11 bzw. Steuer- und Auswerteeinrichtung 11, die nachfolgend in den Figuren der besseren Übersichtlichkeit halber nicht mehr dargestellt ist.

Figur 2 zeigt die Vermessung eines idealen Rohres 12 als Messobjekt, das in der Transportrichtung B durch den Messraum 4 und die - hier senkrecht zu B verlaufende - Messachse A transportiert und fortlaufend vermessen wird. Die in Figur 2 rechts gezeigte ideale Transmissionskurve 10 ergibt sich bei Vermessung des idealen Rohrs 12 bei idealem Detektor, hoher Belichtungszeit und Mittelung über mehrere Messungen, z. B. mit mehr als 10 ms Belichtungszeit und bei Mittelung über 50 Messungen. In der Transmissionskurve 10 ist die Absorption durch das Material des Rohres 12 in üblicher Weise als Abschwächung der Intensität zu erkennen, die in den Figuren nach rechts zunimmt. Somit zeigt die Transmissionskurve 10 in der Leermessung der Fig. 1 zunächst nur eine Nulllinie 10a, d.h. durchgängig maximale Intensität.

Durch das Material des Rohres 12 tritt eine Absorption und Verringerung der Intensität I auf, die zu Transmissionskurven 10 führt, die von der Nulllinie 10a abweichen. In äußeren Winkelbereichen 14-1 des Röntgenstrahls 3, die am Rohr 12 vorbeiführen, liegt gemäß Fig. 2, 3 somit weiter die Nulllinie 10a vor. Nach innen, d. h. zur Messachse A hin, schließen sich Winkelbereiche 14-2 an, in denen die Rohrwand 12a von den Strahlen her im Wesentlichen parallel erfasst wird. Entsprechend zeigt die Transmissionskurve hier in äußeren Kurvenbereichen S2 ihren maximalen Absorptionswert, da das Rohr 12 in seinen äußeren Bereichen die größte Absorption zeigt. Der mittlere Winkelbereich 14-3 der Röntgenstrahlung 3 entspricht einem mittleren Kurvenbereich S3; hier fällt die Transmissionskurve zur Messachse B hin ab, d.h. die Intensität nimmt zu, da die Rohrwand 12a hier durch die Strahlung senkrechter erfasst wird. Aus der Transmissionskurve 10 können gemäß Figur 2 die relevanten geometrischen Abmessungen, d. h. der Außendurchmesser Da, der Innendurchmesser Di, und die beiden Wanddicken WT1 und WT2 in den äußeren Bereichen entnommen werden. Die ideale Transmissionskurve 10 eines idealen Rohres nach Fig. 2 bei großen Belichtungszeiten und Mittelungen kann jedoch bei einer fortlaufenden Vermessung eines in Transportrichtung B transportierten Rohres 12 so nicht erreicht werden; auch zeigt der Röntgendetektor ein spezifisches Grundrauschen, das von der idealen Kurve abweicht.

Figur 3 zeigt die Transmissionskurve 10 bei einer Messung mit Belichtungszeit von 1 ms und ohne Mittelung; entsprechend sieht die Transmissionskurve 10 sehr verrauscht aus. Somit sind insbesondere kleinere Abweichungen von der idealen Transmissionskurve nicht zu erkennen.

In Figur 4 ist die Vermessung eines Rohres 12 gezeigt, das an der Außenseite und/oder an der Innenseite seiner Rohrwand 12a eine Materialschwächung 13, d. h. eine Delle oder Ausnehmung, aufweist. Die Materialschwächung 13 kann z. B. auch ein Lunker, d. h. Lufteinschluss in der Rohrwand 12a, sein. Hier liegt die Materialschwächung im mittleren Winkelbereich 14-3 vor. Bei den gleichen Messbedingungen wie in Figur 3, d. h. mit einer Belichtungszeit von 1 ms und ohne Mittelung über mehrere Messungen, ist in der Transmissionskurve 10 ein Merkmal 15a erkennbar, hier durch die geringere Abschwächung in der Transmissionskurve 10. Durch Bildung einer Differenz der aktuellen Transmissionskurve 10 von Fig. 4 und der Referenz-Transmissionskurve der Fig. 3 werden die Anteile des Rauschens weitgehend reduziert. Hierbei werden insbesondere die Intensitätswerte der einzelnen Messkanäle 8 bzw. Pixel voneinander subtrahiert. Insbesondere führt die Bildung einer gemittelten Transmissionskurve 10 als Referenz- Transmissionskurve, die dann von der aktuellen Transmissionskurve 10 der Fig. 4 abgezogen wird, zu einer genaueren Detektion der Materialschwächung 13.

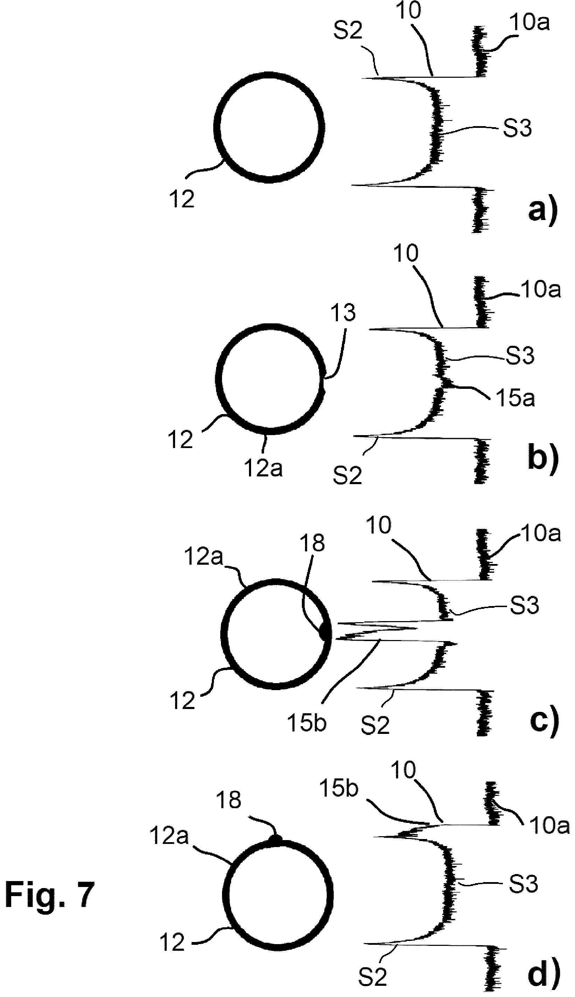

Figur 7 zeigt Transmissionskurven 10 bei unterschiedlichen Rohren 12: Gemäß Diagramm a) ist eine Transmissionskurve 10 mit den oben genannten Messbedingungen bei einem fehlerfreien Rohr 12 zu sehen; gemäß Diagramm b) ist eine Materialschwächung 13 in dem mittleren Winkelbereich 14-3 des Abstrahlwinkels α, ausgebildet, die entsprechend in der Transmissionskurve 10 in dem mittleren Signalbereich S3 als Merkmal 15a zu erkennen ist. Diagramm c) zeigt ein Rohr 12 mit einem Defekt 18 als Abbrand, der insbesondere beim Extrudieren auftreten kann und sich als Materialanhäufung, insbesondere auch von verbranntem Material, an der Innenfläche der Rohrwand 12a ausbildet. Entsprechend ist in der Transmissionskurve 10 in dem mittleren Signalbereich S3 ein Merkmal 15b als Intensitätsabschwächung, zu erkennen. In Diagramm d) der Figur 7 ist der Abbrand 18 an dem äußeren Bereich des Rohres 12 ausgebildet, d.h. dem Winkelbereich 14-2 der Röntgenstrahlung 3, und fällt somit in den äußeren Signalbereich S2 mit der maximalen Absorption in der Transmissionskurve 10, kann jedoch grundsätzlich bei der nachfolgenden Differenz-Bildung der einzelnen Messkanäle 8 aufgelöst werden.

Die Figuren 4 bis 6 zeigen die Erfassung eines Defekts in den verschiedenen Richtungen. In der Messrichtung Z der Fig. 4 liegen mehrere Messkanäle 8 bzw. Pixel nebeneinander, z.B. dreitausend Messkanäle. Somit liegt hier z.B. ein Array aus 3000x1 Messkanälen 8 bzw. Pixeln vor. Figur 5 zeigt eine Aufsicht auf Fig. 3, d. h. die Aufsicht in Messrichtung Z und somit senkrecht auf die Transportrichtung B bzw. auf die Rohrachse. Der Röntgenstrahl 3 weist somit den kleineren Öffnungswinkel beta auf, der hier z.B. von nur einem Messkanal 8 bzw. einem Pixel empfangen wird, mit einer Signalbreite d8. Somit liegt eine Ausbildung mit einer einzigen Detektorzeile vor. An dem Rohr 12 ergibt sich in Fig. 5 vorne eine Anfangsbreite d3 des Röntgenstrahls 3, die entsprechend dem divergenten Strahlverlauf kleiner ist als die Signalbreite d8.

Erfindungsgemäß kann vorteilhafterweise eine vollständige Erfassung auch eines Defektes 13, 18 erfolgen, der sich über größere Bereiche des Messobjektes 12 erstreckt. Die Erstreckung des Defektes 13, 18 entlang der Rohrachse B bzw. in Transportrichtung ist in Fig. 6 gezeigt, hier mit Fig. 6 als Aufsicht auf Fig. 4 mit dem Defekt 13. Die Längserstreckung des Defektes 13, 18 kann durch Vergleich der zeitlich aufeinanderfolgenden Messungen erfolgen. Ein deutliches Signal ergibt sich, wenn gemäß Figur 6 der Röntgenstrahl 3 mit seiner Anfangsbreite d3 im Bereich des Messobjektes 12 vollständig in dem Defekt 13 liegt, da hier die eindeutige Veränderung des Messsignals gegenüber der vorherigen Referenzmessung erfolgt. Für eine durchgängige Erfassung des Defektes 13, 18 in Transportrichtung B kann somit eine relevante Grenz-Extrusionsgeschwindigkeit aus der Belichtungszeit, z.B. 1 ms oder 10 ms, und der Anfangsbreite d3 ermittelt werden. Bei z. B. einer Anfangsbreite d3 des Röntgenstrahls 3 in Transportrichtung bzw. entlang der Rohrachse B ergibt sich auf dem Röntgendetektor 6 z. B. eine Signalbreite d8 von d8 = 70 µm.

Damit der Fehler, z. B. eine Materialschwächung 13, mit einer Längserstreckung in Richtung der Transportrichtung B von 5 mm vollständig erfasst wird, ergibt sich somit bei einer Anfangsbreite d3 = 30 µm des Röntgenstrahls 3 und einer Belichtungszeit t = 1 ms eine kritische Geschwindigkeit von 298,8 m/min. Bei einer Belichtungszeit t = 10 ms ergibt sich entsprechend eine kritische Geschwindigkeit von 29,8 m/min, die entsprechend eine genaue Untersuchung des Fehlers ermöglicht.

Figur 13 zeigt ein Wellrohr 112 als Strang bzw. Messobjekt, das Erhebungen 113 (Berge, Wellen) und Senken (Täler) 114 aufweist. Das Wellrohr 112 kann mit einem zusätzlichen Innenrohr 111, wie es insbesondere zum Leiten von Fluiden üblich ist, oder ohne Innenrohr, wie es z. B. beim Verlegen von Kabeln eingesetzt wird, ausgebildet sein. Das hier gezeigte Wellrohr 112 weist ein durchgängiges Innenrohr 111 auf. Somit sind an dem Wellrohr 112 ein Außendurchmesser Da, ein Innendurchmesser Di, sowie die Höhen der Flanken V1, V2 zu messen. Weiterhin ist an dem Wellrohr 112 in Fig. 13 beispielhaft ein erster Defekt als Abbrand 18, und ein weiterer Defekt, z. B. ein Riss in der Innenschicht, als Materialschwächung 13 ausgebildet.

Figur 13 zeigt Messungen an vier Messebenen:
- Messebene A, die eine Messung an einer ordnungsgemäßen Erhebung 113 darstellt,
- Messebene B, eine ordnungsgemäße Messung in einer Senke 114 darstellt,
- Messebene C, die eine Messung im Bereich einer Senke 114 mit der Materialschwächung 13, hier einem Riss in der Innenschicht, darstellt, und
- Messebene D, die eine Messung im Bereich der Erhebung 113 mit sowohl der Materialschwächung 114 durch die fehlende Innenschicht als auch dem Materialabbrand 118 als Einschluss darstellt.

Weiterhin sind in Fig. 13 die Transmissionskurven der Messebenen E1 bis E4 entsprechend wiedergegeben. Hierbei weist jede Transmissionskurve 10 wiederum äußere Bereiche als Nulllinien 10a auf, die Bereiche ohne Intensitätsabschwächung neben dem Wellrohr 112 darstellen, d. h. entsprechend Fig. 1 bis 4. In den Ebenen E1 und E4 folgen nach innen Peaks 113a als Absorption durch die Erhebung 113, d.h. die gewellte Außenschicht, dann Bereiche 113b mit schwacher Absorption zwischen der Erhebung und dem Innenrohr 111, nachfolgend das Innenrohr 111 und in der Mitte ein Bereich schwacher Absorption entsprechend dem Winkelbereich 14-3 der Fig. 1 - 3. In dem Diagramm der Ebene E2, d.h. in der Senke 114, liegt die Außenschicht an dem Innenrohr 111, so dass ein gemeinsamer Peak gebildet wird, sodass im Wesentlichen die Bereiche 10a, 111, und 14-3 auftreten.

In der Ebene E3 ist ergänzend zu dem Diagramm der Ebene E2 in dem mittleren Bereich 14-3 die Materialschwächung 13 als Defekt 15a zu erkennen. In Diagramm E4 ist ergänzend zu dem Diagramm der Ebene E1 im mittleren Bereich 14-3 der der Abbrand 18 wiederum als Intensitätsverringerung 15b ausgebildet, innerhalb von der der Riss in der Materialschicht, d.h. die großflächigere Materialschwächung 14, als Defekt 15a zu erkennen ist.

Somit können in sämtlichen Bereichen des Wellrohrs 112 Defekte 13, 18 in der Transmissionskurve 10 als Defekte 15a, 15b erkannt werden, und insbesondere bei unterschiedlicher Dimensionierung der Defekte 13, 18 auch sich überlappende Defekte differenziert werden.

Figur 8 zeigt eine Messvorrichtung, bei der mehrere Messachsen A in Transportrichtung B hintereinander, z. B. zueinander parallel hintereinander angeordnet sind. Somit kann gegenüber Fig.5, 6 bei gleicher jeweiliger Anfangsbreite b3 auch noch bei einer höheren Extrusionsgeschwindigkeit ein Defekt 13, 18 vollständig erfasst werden.

In Figur 9 wird ein breiterer Röntgenstrahl 3, mit einem größeren Abstrahlwinkel β senkrecht zur Messebene, bzw. in Transportrichtung B, eingesetzt, mit mehreren Pixeln bzw. Messkanälen 8 in der Transportrichtung B. Gemäß Figur 9 sind drei Messkanäle 10 in Transportrichtung B vorgesehen, es können auch z. B. bis zu 128 entsprechende Messkanäle 10 hintereinander angeordnet sein, d. h. z. B. als 3.000 x 128-Matrix. Somit kann entsprechend der Ausführungsform der Fig. 8 ein Defekt 13, 18 in Transportrichtung B bzw. Längsrichtung auch noch bei einer höheren Extrusionsgeschwindigkeit vollständig erfasst werden.

Figur 12 zeigt eine Ausführungsform, bei der mehrere Messachsen A in Umfangsrichtung zueinander versetzt und nicht parallel zueinander angeordnet sind, d.h. derartig um das Rohr 12 herum angeordnet, dass jede Röntgenquelle 2 mit ihrer Messachse A das Rohr 12 aus unterschiedlichen Richtungen erfasst. Die Messachsen A können in der gleichen Messebene liegen oder auch - zusätzlich zu dem Winkelversatz - in Transportrichtung versetzt, d.h. in verschiedenen bzw. aufeinanderfolgenden Messebenen. Bei Transport des Rohres 12 in der Transportrichtung B werden somit Projektionen aus unterschiedlichen Richtungen ermöglicht, so dass eine 3D- Rekonstruktion des Fehlers 13, 18 und hierdurch eine Bestimmung des Fehlervolumens erfolgt. Dies kann durch trigonometrische Bewertung bzw. Tomografie, und/oder Vergleich und Zuordnung des Defektes 13, 18 in der Transmissionskurve 10 erfolgen.

Gemäß Figur 10, 11 kann zusätzlich zu oder anstelle der in Fig. 10 gezeigten, senkrecht zur Transportrichtung B bzw. Längsachse des Rohres 12 verlaufenden Messachse A auch nach Fig. 11 eine schräge Messachse A vorgesehen sein, die somit nicht senkrecht zu der Transportrichtung B verläuft. Durch den längeren Weg durch die Rohrwand 12a ergibt sich eine höhere Absorption in der Transmissionskurve 10, so dass ein besserer Kontrast erreicht wird. Weiterhin kann durch den schrägen Verlauf auch eine trigonometrische Bestimmung erfolgen, wenn zusätzlich die in Figur 10 vorgesehene senkrechte Messachse A vorgesehen ist.

Gemäß weiterer Ausführungsformen kann eine bewegliche Messachse A vorgesehen sein: Gemäß Figur 15 ist die Messachse A in der Messebene, d. h. senkrecht zur Transportachse B, verstellbar, so dass ein Autofokus zur selbsttätigen Zentrierung des Röntgenstrahls 3 und der Messachse A erfolgt, wie in Figur 11 gezeigt ist. In den Figuren ist hierzu eine Verstelleinrichtung 16 ergänzt. Bei Ermittlung einer Absorption in der Transmissionskurve 10 außerhalb des mittleren Bereiches kann somit in Figur 11 eine selbsttätige Verstellung derartig erfolgen, dass das Messobjekt 12 in einem mittleren Bereich der Transmissionskurve 10 erfasst wird. Figur 16 zeigt einen einstellbaren Zoom, d. h. eine Längsverstellung der Röntgen- Messvorrichtung 1, bzw. von Röntgenquelle 2 und Röntgendetektor 6, in Richtung der Messachse A. Somit kann die Vergrößerung eingestellt werden und der Bereich in der Transmissionskurve 10, der das Messobjekt 12 erfasst, d.h. zwischen den

Bereichen der Nulllinie 10a, vergrößert werden. Hierbei kann insbesondere ein selbsttätiger Zoom erfolgen, bei dem somit gemäß Figur 12 durch Längsverstellung in Richtung Messachse A eine optimale Position der Röntgenquelle 2 ermittelt und eingestellt wird.

Figur 14 zeigt die Ausführungsform mit einer in Umfangsrichtung um die Transportachse B erfolgenden Rotation bzw. Umlauf-Bewegung. Da das Rohr 12 in Richtung der Transportachse B transportiert wird, ergibt sich ein schraubenförmiger bzw. helischer Verlauf der Messachse A gegenüber dem Umfang des Rohres 12. Somit liegt ein rotierendes System mit in Transportrichtung bzw. Richtung der Transportachse B ausgerichteter Detektorzeile vor.

Bei allen Ausführungsformen können bei der Auswertung der Messsignale, d. h. der ermittelten Transmissionskurven 10, somit zunächst mehrere ordnungsgemäße Messungen, d. h. z. B. Transmissionskurven 10 gemäß Figur 3 sowie Figur 7a) bei einem normalen Rohr 12 aufgenommen und gemittelt werden, so dass idealerweise eine Referenz- Transmissionskurve gemäß Figur 2 - mit spezifischen Abweichungen der Messkanäle 8 - ermittelt wird, die als Referenz-Messung für nachfolgende Bewertungen dient, insbesondere für eine Differenzbildung der Intensitätswerte der einzelnen Messkanäle 8. Hierbei kann insbesondere ein machine learning bzw. selbsttätiges Lernen, z. B. auch als KI bzw. artificial intelligence, und/oder durch Auto-Regression, erfolgen, so dass durch eine vollautomatisierte Messung eine fortlaufende Verbesserung der Bewertung erfolgt. Hierbei können zum einen bei Erkennen ordnungsgemäßer Bereiche bessere Mittelungen zur Ermittlung einer Referenz eines ordnungsgemäßen Messobjektes 12, 112 erstellt werden; weiterhin kann durch fortlaufende Messungen auch eine genauere Bewertung und Einordnung von Defekten 13, 18, erfolgen; hierbei kann insbesondere auch ein Input von einem Nutzer erfolgen, der bei Ermitteln eines Defektes eine Eingabe zur Charakterisierung des Defektes vornimmt.

### Bezugszeichenliste

- 1: Röntgenmessvorrichtung
- 2: Röntgenquelle
- 3: Röntgenstrahl
- 4: Messraum
- 6: Röntgendetektor
- 8: Messkanal
- 10: Transmissionskurve
- 10a: Nulllinie
- 10r: Referenz-Transmissionskurve
- 11: Auswerteeinrichtung mit Speicher
- 12: Rohr
- 12a: Rohrwand
- 13: Materialschwächung, Delle
- 14-1, 14-2, 14-3: Winkelbereiche des Röntgenstrahls 3

- 15a: Merkmal durch Materialschwächung in Transmissionskurve 10
- 15b: Merkmal durch Abbrand in Transmissionskurve 10
- 16: Verstelleinrichtung
- 18: Defekt, Abbrand
- 111: Innenrohr
- 112: Wellrohr
- 112a: Außenschicht
- 112b: Innenschicht
- 113: Erhebungen (Berge)
- 114: Senken (Täler)

- A: Messachse
- B: Transportrichtung

- S2: äußere Kurvenbereiche
- S3: mittlerer Kurvenbereich

- Z: Messrichtung

- α, β: Abstrahlwinkel

- Da: Außendurchmesser
- Di: Innendurchmesser
- WT1, WT2: Wanddicken
- V1, V2: Breite der Flanken

## Patentansprüche

1. Röntgen-Messverfahren zum Vermessen eines Stranges (12, 112), mit folgenden Schritten:
- Bereitstellen einer Röntgen- Messvorrichtung (1), die eine Röntgenquelle (2), einen Röntgendetektor (6) und einen zwischen diesen ausgebildeten Messraum (4) aufweist,
- Aussenden von Röntgenstrahlung (3) von der Röntgenquelle (2) durch den Messraum (4) und den Strang (12, 112) in einer Messebene entlang einer Messachse (A) und Detektieren der durch den Strang (12, 112) gelangten Röntgenstrahlung durch den Röntgendetektor (6), der mindestens eine Detektorzeile von Messkanälen (8) aufweist,
- Erzeugen einer Transmissionskurve (10) als Messsignal durch den Röntgendetektor (6), wobei die Transmissionskurve (10) detektierte Werte der Intensität (I) der Messkanäle (8) wiedergibt,
- Speichern der Transmissionskurve (10) als mindestens eine Referenz-Transmissionskurve,
- Durchführen mindestens einer weiteren, aktuellen Röntgenmessung durch die Röntgenquelle (2) und den Röntgendetektor (6) und Erstellen einer aktuellen Transmissionskurve (10),
- Vergleichen der aktuellen Transmissionskurve (10) mit zumindest der Referenz-Transmissionskurve, wobei sämtliche Messkanäle (8) verglichen werden,
- Bewerten des Vergleichs und Ermitteln, ob in dem Strang (12, 112) ein Fehler (13, 18) vorliegt,
wobei der Strang (12, 112) durch den Messraum (4) in einer Extrusionsrichtung (B) gefördert und hierbei kontinuierlich vermessen wird, wobei ein Vergleich der Intensitäten (I) der einzelnen Messkanäle (8) der aktuellen Transmissionskurve (10) mit den entsprechenden Messkanälen (8) der Referenz-Transmissionskurve durch Differenz-Bildung durchgeführt wird.

2. Verfahren nach Anspruch 1, **dadurch gekennzeichnet, dass** mehrere Referenz-Messungen des Messobjektes, insbesondere zu mehreren Zeitpunkten aufgenommen werden und eine gemittelte Referenz-Transmissionskurve erstellt wird.

3. Verfahren nach einem der vorherigen Ansprüche, **dadurch gekennzeichnet, dass** die von der Röntgenquelle (2) ausgegebene Röntgenstrahlung (3) in der Messebene ein divergentes Strahlenbündel um die Messachse (A) ausbildet,
wobei die Transmissionskurve (10) äußere Kurvenbereiche (S2) mit höherer Absorption aufweist, in denen die relativ zu der optischen Achse äußeren Wände (12a) des Stranges (12) von der Röntgenstrahlung (3) durchlaufen werden, und einen mittleren Kurvenbereich (S3) mit geringerer Absorption aufweist,
wobei sowohl die äußeren Kurvenbereiche (S2) als auch der mittlere Kurvenbereich (S3) der aktuellen Transmissionskurve und der Referenz-Transmissionskurve miteinander verglichen werden.

4. Verfahren nach einem der vorherigen Ansprüche, **dadurch gekennzeichnet, dass** der Vergleich der aktuellen Transmissionskurve (10) mit der Referenz-Transmissionskurve einen oder mehrere der folgenden Vergleichsschritte beinhaltet:
- Bildvergleich,
- Vergleich der Summe aller Intensitäten (I) aller Messkanäle (8) der aktuellen Transmissionskurve (10) mit der Summe aller Intensitäten der Messkanäle (8) der Referenz-Transmissionskurve,
- Autoregression,
- einen selbstlernenden Algorithmus, z.B. künstliche Intelligenz, z.B. machine learning, z.B. deep learning, insbesondere zur Klassifizierung von Fehlern.

5. Verfahren nach einem der vorherigen Ansprüche, **dadurch gekennzeichnet, dass** in der aktuellen Transmissionskurve (10) durch den Vergleich mit der Referenz-Transmissionskurve (10) als Fehler (13, 18) ein oder mehrerer der folgenden Merkmale ermittelt werden:
- eine Materialschwächung (13), z.B. Fehlstelle, Riss in einer Schicht, Defekt oder Lunker, als zusammenhängende Bereiche oder Messkanäle (10) mit einer geringeren Intensität (I), und/oder
- eine Material-Ablagerung, insbesondere Abbrand (18), als zusammenhängender Bereich von Messkanälen (10) mit einer höheren Intensität (I).

6. Verfahren nach einem der vorherigen Ansprüche, **dadurch gekennzeichnet, dass** dreidimensionale Erstreckungen der Fehler (13, 18) wie folgt ermittelt werden:
- eine Breite des Fehlers (13, 18) in der Messebene aus benachbarten Messkanälen (8) der aktuellen Transmissionskurve (10), und
- eine Längserstreckung des Fehlers (13, 18) in einer Verstellrichtung oder Transportrichtung (B) aus Transmissionskurven (10) von zeitlich aufeinanderfolgenden Messungen des geförderten oder verstellten Stranges (12, 112),
wobei eine Topologie und/oder Form und/oder ein Volumen des Fehlers (13, 18) ermittelt wird.

7. Verfahren nach Anspruch 6, **dadurch gekennzeichnet, dass** bei der Ermittlung des Fehlers (13, 18) ein oder mehreren der folgenden Größen berücksichtigt werden:
- in Längsrichtung die Anzahl der Messungen pro Zeit, Belichtungszeit (t), und/oder Extrusionsgeschwindigkeit oder Transportgeschwindigkeit in Transportrichtung (B) oder Verstellrichtung,
- in der Breite eine relative Breite des Fehlers (13, 18) im Verhältnis zur Gesamtbreite der Transmissionskurve des Stranges, und/oder eine Geometrie der Projektion von der Röntgenquelle zum Röntgendetektor.

8. Verfahren nach einem der vorherigen Ansprüche, **dadurch gekennzeichnet, dass** Messungen in mehreren statischen Messachsen (A) durchgeführt und bei der Bestimmung des Fehlers (13, 18) herangezogen werden, insbesondere:
in mehreren, in der Transportrichtung (B) oder einer Verstellrichtung hintereinander angeordneten Messachsen (A), und/oder
- in mehreren, in Umfangsrichtung um die Transportrichtung (B) und/oder Symmetrieachse des Messraums (4) angeordneten Messachsen (A), und/oder
- in unterschiedlich gegenüber der Transportrichtung (B) oder Verstellrichtung geneigten Messachsen, z.B. einer schrägen Messachse zur Kontrasterhöhung.

9. Verfahren nach einem der vorherigen Ansprüche, **dadurch gekennzeichnet, dass**
die ein oder mehreren Röntgenquellen (3) während des Transportes des Stranges (12, 112) verstellt werden
- in Transportrichtung (B), und/oder
- in Umfangsrichtung, z.B. rotierend und/oder reversierend. um die Transportachse und/oder eine Symmetrieachse des Messraums, und/oder
- in Richtung ihrer Messachse (A).

10. Verfahren nach einem der vorherigen Ansprüche, **dadurch gekennzeichnet, dass** bei einem Vergleich von Transmissionskurven (10) der unterschiedlichen Messungen und/oder Messachsen eine Positionszuordnung und/oder trigonometrische Ermittlung erfolgt.

11. Verfahren nach einem der vorherigen Ansprüche, **dadurch gekennzeichnet, dass** die Referenz-Transmissionskurve durch Einbeziehung aktueller Transmissionskurven (10) fortlaufend geändert wird und ein adaptiver Vergleich der aktuellen Transmissionskurve (10) mit den vorherigen Transmissionskurven erfolgt,
z.B. unter Berücksichtigung von langfristigen Änderungen der Intensitäten über einen längeren Zeitraum.

12. Verfahren nach einem der vorherigen Ansprüche, **dadurch gekennzeichnet, dass** als Strang ein Wellrohr (112) vermessen wird, wobei Messungen erfolgen in sowohl Erhebungen (113) des Wellrohrs (112) als auch Senken (114) des Wellrohrs (112) und ein Vergleich mit einer Referenz-Transmissionskurven (10) erfolgt,
wobei aus den aktuellen Transmissionskurven (10) an unterschiedlichen Bereichen oder Messebenen (E1, E2, E3, E4) des Wellrohrs (112) eines oder mehrere der folgenden Merkmale ermittelt werden:
- ein Innenrohr (111) oder eine Innenschicht des Wellrohrs (112) als Bereich geringerer Intensität (I), und/oder
- Erhebungen (113) und Senken (114), insbesondere an einer Innenschicht, wobei Erhebungen (113) als von dem Innenrohr (111) oder einer Innenschicht nach außen beabstandete Materialbereiche erkannt werden,
wobei Defekte (13, 18) in sowohl den Senken (114) als auch den Erhebungen (113) als Materialabschwächungen (13) und/oder Materialerhöhungen (18) erkannt werden.

13. Röntgen-Messvorrichtung (1), die mindestens eine Röntgenquelle (2) zum Aussenden von Röntgenstrahlung (3) entlang einer Messachse (A) und einen Röntgendetektor (6) aufweist,
wobei zwischen der Röntgenquelle (2) und dem Röntgendetektor (6) ein Messraum (4) zur Aufnahme eines in einer Transportrichtung (B) geförderten Stranges (12, 112) ausgebildet ist, und
eine Auswerteeinrichtung (11) mit einem Speicher,
wobei die Auswerteeinrichtung (11) ausgelegt ist, von dem Röntgendetektor (6) ermittelte Transmissionskurven (10) aufzunehmen und direkt oder nach Verarbeitung als Referenz-Transmissionskurven in zu speichern, und
wobei die Auswerteeinrichtung (11) ausgebildet ist, aktuelle Transmissionskurven (10) des Röntgendetektors (6) mit der mindestens einen Referenz-Transmissionskurve zu vergleichen und aus dem Vergleich eine Bewertung durchzuführen, ob in der aktuellen Transmissionskurve (10) ein Fehler vorliegt,
wobei die Auswerteeinrichtung (11) weiterhin ausgebildet ist, einen Vergleich der Intensitäten (I) der einzelnen Messkanäle (8) der aktuellen Transmissionskurve (10) mit den entsprechenden Messkanälen (8) der Referenz-Transmissionskurve durch Differenz-Bildung durchzuführen.

14. Röntgen-Messvorrichtung (1) nach Anspruch 13, **dadurch gekennzeichnet, dass** sie mehrere statische Messachsen (A) mit jeweils einer Röntgenquelle (2) und einem Röntgendetektor (6) aufweist, wobei die mehreren statischen Messachsen (A) zueinander versetzt sind:
- entlang der Symmetrieachse (SA), z.B. als hintereinander in Transportrichtung angeordnete Messachsen (B), und/oder
- in Umfangsrichtung um den Messraum (4), insbesondere konzentrisch auf die Symmetrieachse (SA) gerichtete Messachsen (A),
- in ihrer Neigung gegenüber der Symmetrieachse (SA), insbesondere mit einer schrägen Symmetrieachse (SA).

15. Röntgen-Messvorrichtung (1) nach Anspruch 13 oder 14, **dadurch gekennzeichnet, dass** sie eine Verstelleinrichtung (16) zur Verstellung einer Position der Röntgenquelle (2) in Richtung der Messachse (A) aufweist, z.B. als Autofokussierung.

16. Röntgen-Messvorrichtung (1) nach einem der Ansprüche 13 bis 15, **dadurch gekennzeichnet, dass** sie eine Verstelleinrichtung (16) zum Rotieren oder Reversieren der Röntgenquelle (2) und des Röntgendetektors (6) um eine Transportachse aufweist.

17. Röntgen-Messvorrichtung (1) nach einem der Ansprüche 13 bis 16, **dadurch gekennzeichnet, dass** der Röntgendetektor (6) aufweist:
eine oder mehrere entlang einer Messrichtung (Z) benachbarte Detektorzeilen von Messkanälen (8), wobei
jede Detektorzeile mehrere, z.B. dreitausend, Messkanäle (8) aufweist, z.B. als 3200 x 1- Matrix oder 3200 x 2-Matrix oder 3000 x 128 Matrix.

18. Röntgen-Messvorrichtung (1) nach einem der Ansprüche 13 bis 17, **dadurch gekennzeichnet, dass** die Messkanäle ausgebildet sind als
- CMOS- Sensoren, und/oder
- CCD- Sensoren, z.B. time to delay (TDI) CCD Sensoren, und/oder
- Szintillations-Zähler.

19. Röntgen-Messvorrichtung (1) nach einem der Ansprüche 13 bis 18, **dadurch gekennzeichnet, dass** eine Röntgen-Spannung der Röntgenquelle im Bereich von 15 bis 80 KV, vorzugsweise 15 bis 70 KV liegt, insbesondere mit Strömen im Bereich von 0,1 mA bis 2 mA.

20. Röntgen-Messvorrichtung (1) nach einem der Ansprüche 13 bis 19, **dadurch gekennzeichnet, dass** der Röntgen-Detektor plan ausgebildet ist, insbesondere mit einer planen Messebene, die senkrecht zur Messachse (A) der Röntgenquelle (2) steht.

## Claims

1. X-ray measuring method for measuring a strand (12, 112), comprising the following steps:
- providing an X-ray measuring device /(1), which comprises an X-ray source (2), an X-ray detector (6) and a measuring space (4) formed in-between them,
- emitting X-radiation (3) from the X-ray source (2) through the measuring space (4) and the strand (12, 112) in a measuring plane along a measuring axis (A) and detecting the X-radiation passing through the strand (12, 112) by means of the X-ray detector (6), which comprises at least one detector row of measurement channels (8),
- generating a transmission curve (10) as measuring signal by means of the X-ray detector (6), where the transmission curve (10) expresses detected values of the intensity (I) of the measuring channels (8),
- storing the transmission curve (10) as at least one reference transmission curve,
- carrying out at least one further, current X-ray measurement by means of the X-ray source (2) and the X-ray detector (6), and generating a current transmission curve (10),
- comparing the current transmission curve (10) with at least the reference transmission curve, whereby all measuring channels (8) are compared,
- evaluating the comparison and determining whether a fault is present in the strand (12, 112),
wherein the strand (12, 11) is continuously transported through the measuring space (4) in a direction (B) of extrusion and hereby continuously measured,
wherein a comparison of the intensities (I) of the individual measuring channels (8) of the current transmission curve (10) with the corresponding measurement channels (8) of the reference transmission curve is carried out by calculating the respective differences.

2. Method according to claim 1, **characterized in that** multiple reference measurements of the measurement object are taken, in particular at multiple points in time, and an averaged reference transmission curve is generated.

3. Method according to one of the preceding claims, **characterized in that** the X-radiation (3) emitted by the X-ray source form a divergent bundle of rays around the measuring axis (A) in the measuring plane,
where the transmission curve (10) comprises outer curve regions (S2) with high absorption, in which the outer walls (12a) of the strand (12) that are on the outside relative to the optical axis are passed by the X-radiation (3), and a middle curve region (S3) with less absorption,
where both the outer curve regions (S2) and the middle curve region (S3) of the current transmission curve and the reference transmission curve are compared with one another.

4. Method according to one of the preceding claims, **characterized in that** the comparison of the current transmission curve (10) with the reference transmission curve includes one or more of the following comparison steps:
- image comparison,
- comparison of the sum of all intensities (I) of all measuring channels (8) of the current transmission curve (10) with the sum of all intensities of the measuring channels (8) of the reference transmission curve,
- autoregression,
- a self-learning algorithm, for example artificial intelligence, for example machine learning, for example deep learning, in particular for classifying faults.

5. Method according to one of the preceding claims, **characterized in that** at least one characteristic is determined as a fault (13, 18) in the current transmission curve (10) by means of the comparison with the reference transmission curve, the characteristic being one or more of the following characteristics:
- a weakening (13) of material, e.g. an imperfection, a rupture in a layer, a defect or a shrinkage cavity, as contiguous areas or neighboring measuring channels (10) with a low intensity, and/or
- a material deposit, in particular a burn-off, as contiguous area of measurement channels with a higher intensity,

6. Method according to one of the preceding claims, **characterized in that** three-dimensional extensions of faults (13, 18) are determined by:
- determining a width of the fault (13, 18) in the measuring plane from neighboring measurement channels (8) of the current transmission curve (10), and
- determining a longitudinal extension of the fault (13, 18) in an adjustment direction or transport direction (B) from transmission curves (10) of temporally successive measurements of the transported strand (12, 112),
wherein a topology of the fault and/or a shape of the fault and/or a volume of the fault (13, 18) is determined..

7. Method according to claim 6, **characterized in that** when determining the fault one or more of the following characteristics are taken into account:
- in the longitudinal direction, the number of measurements per time, exposure time, and/or an extrusion velocity or transport velocity in transport direction or adjustment direction,
- in the width, a relative width of the fault in relation to the overall width of the transmission curve of the strand, and/or a geometry of the projection from the X-ray source to the X-ray detector.

8. Method according to one of the preceding claims, **characterized in that** measurements in multiple static measuring axes (A) are carried out and used for determining a fault, in particular measurements:
- in multiple measuring axes (A) being arranged one behind another in the transport direction (B) or an adjustment direction, and/or
- in multiple measuring axes being arranged in the circumferential direction around the transport direction (B) and/or in the circumferential direction around an axis of symmetry of the measuring space (4),
- multiple measuring axes inclined at different angles in relation to the transport direction (B) or adjustment direction, e.g. an inclined measuring axis for enhancing contrast.

9. Method according to one of the preceding claims, **characterized in that** said one or more X-ray sources (3) are adjusted during transport of the strand (12, 112):
- in transport direction (B) and/or
- in circumferential direction, e.g. by rotating and/or reversing around the transport axis and/or an axis of symmetry of the measuring space, and/or
- in the direction of their measuring axes (A).

10. Method according to one of the preceding claims, **characterized in that** when comparing transmission curves (10) of the various measurements and/or measuring axes a position allocation and/or a trigonometric determination is carried out.

11. Method according to one of the preceding claims, **characterized in that** the reference transmission curve is continuously amended by taking into account current transmission curves (10), and an adaptive comparison of the current transmission curve (10) with previous transmission curves is carried out, e.g. by taking into account long-term changes of the intensities over a longer period of time.

12. Method according to one of the preceding claims, **characterized in that** said measured strand is a corrugated pipe (112),
wherein measurements are carried out both in waves (1143) of the corrugated pipe and in valleys(114) of the corrugated pipe (112), and a comparison with a reference transmission curve (10) is carried out, wherein characteristics,
wherein one or more of the following characteristics are determined from current transmission curves (10) at different areas or in different measuring planes (E1, E2, E3, E4) of the corrugated pipe (112)
- an inner pipe (111) or an inner layer of the corrugated pipe (112) as an area of lower intensity (I),
- waves (113) and valleys (114), in particular of an inner layer, wherein said waves (113) are recognized as material regions spaced apart towards the outside from said inner pipe (111) or said inner layer, where defects (13, 18) in both the valleys (114) and the waves (113) are recognized as material weakenings (13) or material increases (18).

13. X-ray measuring device (1), comprising at least one X-ray source (2) for emitting X-radiation (3) along a measuring axis, and an X-ray detector (6),
wherein between the X-ray source (2) and the X-ray detector (6) a measuring space (4) for receiving a strand (12, 112) transported in a transport direction (B) is formed,
further comprising an evaluator means (11) with a memory,
wherein the evaluator means (11) is adapted to receive transmission curves (10) detected by the X-ray detector (6) and to store the transmission curves (10) as reference transmission curves directly or after processing, and
wherein the evaluator means is designed to compare current transmission curves (10) of the X-ray detector (6) with the at least one reference transmission curve and to use the comparison to carry out an evaluation as to whether a fault is present in the current transmission curve (10).

14. X-ray measuring device (1) according to claim 13, **characterized in that** it comprises multiple static measuring axes (A) each including an X-ray source (2) and an X-ray detector (6), respectively,
said multiple static measuring axes being offset against one another along at least one of the following directions:
- along an axis of symmetry (SA), e.g. as measuring axes (B) being arranged one after the other in a transport direction,
- in a circumferential direction around said measuring space (4) aligned measuring axes (A), in particular concentrically aligned onto the axis of symmetry (SA),
- offset in their angle of inclination against the axis of symmetry (SA), in particular with an oblique axis of symmetry (SA).

15. X-ray measuring device (1) according to claim 13 or 14, **characterized in that** it comprises an adjustment means (16) for adjusting a position of the X-ray source (2) in the direction of the measuring axis (A), e.g. as an autofocusing step.

16. X-ray measuring device (1) according to one of claims 13 to 15, **characterized in that** it comprises an adjustment means (16) for rotating or reversing the X-ray source (2) and the X-ray detector (6) around a transport axis.

17. X-ray measuring device (1) according to one of claims 13 to 16, **characterized in that** the X-ray detector (6) comprises:
one or more detector rows of measurement channels (8) neighboring along a measuring direction (Z),
each detector row comprising multiple measuring channels, e.g. three thousand measuring channels (8), e.g.
as a 3200 x 1 matrix or
as a 3200 x 2 matrix or
as a 3000 x 128 matrix.

18. X-ray measuring device (1) according to one of claims 13 to 17, **characterized in that** the measuring channels are designed as
- CMOS sensors, and/or
- CCD sensors, e.g. time to delay (TDI) CCD sensors, and/or
- scintillation counters.

19. X-ray measuring device (1) according to one of claims 13 to 18, **characterized in that** an X-ray voltage of the X-ray source lies in the range between 15 and 80 KV, in particular 15 to 70 KV, in particular with currents in the range between 0.1 mA and 2 mA.

20. X-ray measuring device (1) according to one of claims 13 to 19, **characterized in that** the X-ray detector is designed planar, in particular with a planar measuring plane oriented perpendicular to the measuring axis (A) of the X-ray source (2).

## Revendications

1. Dispositif de mesure par rayons X pour mesurer une barre (12, 112), comprenant les étapes suivantes :
- Préparation d'un dispositif de mesure par rayons X (1) qui comporte une source de rayons X (2), un détecteur de rayons X (6) et un espace de mesure (4) constitué entre eux,
- Émission de rayons X (3) par la source de rayons X (2) à travers l'espace de mesure (4) et la barre (12, 112) dans un plan de mesure le long d'un axe de mesure (A) et détection des rayons X passés à travers la barre (12, 112) par le détecteur de rayons X (6) qui comporte au moins une ligne de détecteurs de canaux de mesure (8),
- Production d'une courbe de transmission (10) comme signal de mesure par le détecteur de rayons X (6), où la courbe de transmission (10) restitue des valeurs détectées de l'intensité (I) des canaux de mesure (8),
- Enregistrement de la courbe de transmission (10) sous forme d'au moins une courbe de transmission de référence,
- Réalisation d'au moins une autre mesure actuelle de rayons X par la source de rayons X (2) et le détecteur de rayons X (6) et production de la courbe de transmission actuelle (10),
- Comparaison de la courbe de transmission actuelle (10) avec au moins la courbe de transmission de référence, où tous les canaux de mesure (8) sont comparés,
- Évaluation de la comparaison et détermination de la présence éventuelle d'un défaut (13, 18) dans la barre (12, 112),
où la barre (12, 112) est déplacée à travers l'espace de mesure (4) dans une direction d'extrusion (B) et y est mesurée en continu,
où une comparaison des intensités (I) de chaque canal de mesure (8) de la courbe de transmission actuelle (10) est effectuée avec les canaux de mesure correspondants (8) de la courbe de transmission de référence par calcul de différence.

2. Procédé selon la revendication 1, **caractérisé en ce qu'**une pluralité de mesures de référence de l'objet de mesure, en particulier à plusieurs moments, est enregistrée et une courbe de transmission de référence moyennée est produite.

3. Procédé selon l'une des revendications précédentes, **caractérisé en ce que** les rayons X (3) émis par la source de rayons X (2) dans le plan de mesure forment un faisceau de rayonnement divergent autour de l'axe de mesure (A), où la courbe de transmission (10) comporte des zones de courbe externes (S2) avec une absorption plus élevée, dans lesquelles les surfaces externes (12a) de la barre (12) par rapport à l'axe optique sont parcourues par les rayons X (3) et comporte une zone de courbe médiane (S3) avec une absorption plus faible,
où aussi bien les zones de courbe externes (S2) que la zone de courbe médiane (S3) de la courbe de transmission actuelle et de la courbe de transmission de référence sont comparées entre elles.

4. Procédé selon l'une des revendications précédentes, **caractérisé en ce que** la comparaison de la courbe de transmission actuelle (10) avec la courbe de transmission de référence comprend au moins un des éléments comparatifs suivants :
- comparaison d'images,
- comparaison de la somme de toutes les intensités (I) de tous les canaux de mesure (8) de la courbe de transmission actuelle (10) avec la somme de toutes les intensités des canaux de mesure (8) de la courbe de transmission de référence,
- auto-régression,
- un algorithme d'apprentissage automatique, p. ex. intelligence artificielle, p. ex. machine learninig, p. ex. deep learning, en particulier pour classer les défauts.

5. Procédé selon l'une des revendications précédentes, **caractérisé en ce qu'**est déterminé comme défaut (13, 18) dans la courbe de transmission actuelle (10) par la comparaison avec la courbe de transmission de référence (10) au moins l'une des caractéristiques suivantes :
- un affaiblissement du matériau (13), p. ex. lacune, fissure dans une couche, défaut ou vide, en tant que zones ou canaux de mesures continus (10) d'intensité réduite (I), et/ou
- une accumulation de matériau, en particulier une zone d'oxydation (18), en tant que zones de canaux de mesures (10) d'intensité accrue (I).

6. Procédé selon l'une des revendications précédentes, **caractérisé en ce que** des extensions tridimensionnelles des défauts (13, 18) sont déterminées comme suit :
- une largeur du défaut (13, 18) dans le plan de mesure à partir de canaux de mesure voisins (8) de la courbe de transmission actuelle (10), et
- une extension en longueur du défaut (13, 18) dans une direction de déplacement ou direction de transport (B) à partir de courbes de transmission (10) de mesures consécutives de la barre déplacée ou transportée (12, 112),
où l'on détermine une topologie et/ou une forme et/ou un volume du défaut (13, 18).

7. Procédé selon la revendication 6, **caractérisé en ce que** lors de la détermination du défaut (13, 18), au moins une des valeurs suivantes est prise en compte :
- en direction longitudinale, le nombre de mesures rapporté au temps, la durée d'exposition aux rayonnements (t), et/ou la vitesse d'extrusion ou de transport dans la direction de transport (B) ou de déplacement,
- en largeur, une largeur relative du défaut (13, 18) par rapport à la largeur totale de la courbe de transmission de la barre, et/ou une géométrie de la projection de la source de rayons X vers le détecteur de rayons X.

8. Procédé selon l'une des revendications précédentes, **caractérisé en ce que** des mesures sont effectuées selon plusieurs axes de mesure statiques (A) et sont utilisées lors de la détermination du défaut (13, 18), en particulier :
selon plusieurs axes de mesure (A) disposés les uns derrière les autres dans la direction de transport (B) ou dans une direction de déplacement, et/ou
- selon plusieurs axes de mesure (A) disposés longitudinalement autour de la direction de transport (B) et/ou autour de l'axe de symétrie de l'espace de mesure (4), et/ou
- selon des axes de mesure de diverses orientations par rapport à la direction de transport (B) ou de déplacement, p. ex. selon un axe de mesure oblique par rapport à l'augmentation de contraste.

9. Procédé selon l'une des revendications précédentes, **caractérisé en ce que** l'au moins une source de rayons X (3) est déplacée pendant le transport de la barre (12, 112)
- dans la direction de transport (B), et/ou
- dans la direction longitudinale, p. ex. en rotation et/ou réversiblement, autour de l'axe de transport et/ou autour d'un axe de symétrie de l'espace de mesure, et/ou
- dans la direction de son axe de mesure (A).

10. Procédé selon l'une des revendications précédentes, **caractérisé en ce que** lors d'une comparaison de courbes de transmission (10) des différentes mesures et/ou des différents axes de mesure, il se produit une affectation de position et/ou une détermination trigonométrique.

11. Procédé selon l'une des revendications précédentes, **caractérisé en ce que** la courbe de transmission de référence est modifiée en continu par prise en compte de courbes de transmission actuelles (10) et une comparaison adaptative de la courbe de transmission actuelle (10) est effectuée avec les courbes de transmission antérieures,
p. ex. en prenant en compte des modifications durables des intensités sur une durée prolongée.

12. Procédé selon l'une des revendications précédentes, **caractérisé en ce qu'**un tube ondulé (112) est mesuré en tant que barre,
où des mesures se font aussi bien dans des soulèvements (113) du tube ondulé (112) que dans des inclinaisons (114) du tube ondulé (112) et une comparaison est effectuée avec une courbe de transmission de référence (10),
où au moins l'une des caractéristiques suivantes est déterminée à partir des courbes de transmission actuelles (10) en différentes zones ou niveaux de mesure (E1, E2, E3, E4) du tube ondulé (112) :
- un tube intérieur (111) ou une couche interne du tuyau ondulé (112) en tant que zone de plus faible intensité (I), et/ou
- des soulèvements (113) et des abaissements (114), en particulier sur une couche interne, où des soulèvements (113) sont reconnus en tant que zones matérielles éloignées vers l'extérieur du tube interne (111) ou d'une couche interne,
où des défauts (13, 18) sont reconnus aussi bien dans les abaissements (114) que dans les soulèvements (113) en tant qu'affaiblissements du matériau (13) et/ou excroissances du matériau (18).

13. Dispositif de mesure par rayons X (1) présentant au moins une source de rayons X (2) pour émettre des rayons X (3) le long d'un axe de mesure (A) et un détecteur de rayons X (6),
où entre la source de rayons X (2) et le détecteur de rayons X (6) est constitué un espace de mesure (4) pour enregistrer une barre (12, 112) transportée dans une direction de transport (B), et
un dispositif d'analyse (11) avec une mémoire,
où le dispositif d'analyse (11) est conçu pour analyser des courbes de transmission (10) déterminées par le détecteur de rayons X (6) et pour enregistrer directement ou après traitement comme courbes de transmission de référence, et
où le dispositif d'analyse (11) est conçu pour comparer des courbes de transmission actuelles (10) du détecteur de rayons X (6) à la courbe de transmission de référence et pour effectuer une évaluation à partir d'une comparaison pour savoir s'il existe un défaut dans la courbe de transmission actuelle (10),
où le dispositif d'analyse (11) est conçu en outre pour effectuer une comparaison des intensités (I) de chaque canal de mesure (8) de la courbe de transmission actuelle (10) avec les canaux de mesure correspondants (8) de la courbe de transmission de référence par calcul de différence.

14. Dispositif de mesure par rayons X (1) selon la revendication 13, **caractérisé en ce qu'**il comporte plusieurs axes de mesure statiques (A) avec respectivement une source de rayons X (2) et un détecteur de rayons X (6), où les plusieurs axes de mesure statiques (A) sont déplacés les uns par rapport aux autres :
- le long de l'axe de symétrie (SA), p. ex. en tant qu'axes de mesure (B) disposés les uns derrière les autres dans la direction de transport, et/ou
- longitudinalement autour de l'espace de mesure (4), en particulier de façon concentrique sur les axes de mesure (A) orientés sur l'axe de symétrie (SA),
- dans leur orientation par rapport à l'axe de symétrie (SA), en particulier avec un axe de symétrie oblique (SA).

15. Dispositif de mesure par rayons X (1) selon la revendication 13 ou 14, **caractérisé en ce qu'**il comporte un dispositif de déplacement (16) pour déplacer une position de la source de rayons X (2) en direction de l'axe de mesure (A), p. ex. comme autofocalisation.

16. Dispositif de mesure par rayons X (1) selon l'une des revendications 13 à 15, **caractérisé en ce qu'**il comporte un dispositif de déplacement (16) pour faire tourner ou inverser la source de rayons X (2) et le détecteur de rayons X (6) autour d'un axe de transport.

17. Dispositif de mesure par rayons X (1) selon l'une des revendications 13 à 16, **caractérisé en ce que** le détecteur de rayons X (6) comporte : au moins une ligne de détecteurs de canaux de mesure (8) voisins le long d'une direction de mesure (Z), où
chaque ligne de détecteurs comporte plusieurs, p. ex. trois mille canaux de mesure (8), p. ex. sous forme d'une matrice 3200 x 1 ou d'une matrice 3200 x 2 ou d'une matrice 3000 x 128.

18. Dispositif de mesure par rayons X (1) selon l'une des revendications 13 à 17, **caractérisé en ce que** les canaux de mesure sont conçus comme
- capteurs CMOS, et/ou
- capteurs CCD, p. ex. capteurs CCD à report et intégration (TDI), et/ou
- compteurs à scintillations.

19. Dispositif de mesure par rayons X (1) selon l'une des revendications 13 à 18, **caractérisé en ce qu'**une tension de la source de rayons X se situe dans la gamme de 15 à 80 kV, de préférence de 15 à 70 kV, en particulier avec des intensités dans la gamme de 0,1 mA à 2 mA.

20. Dispositif de mesure par rayons X (1) selon l'une des revendications 13 à 19, **caractérisé en ce que** le détecteur de rayons X est conçu plan, en particulier avec un plan de mesure plan perpendiculaire à l'axe de mesure (A) de la source de rayons X (2).
